(19) Europäisches Patentamt
European Patent Office
Office européen des brevets

(11) EP 2 011 812 A1

(12) EUROPEAN PATENT APPLICATION
published in accordance with Art. 153(4) EPC

(43) Date of publication:
**07.01.2009 Bulletin 2009/02**

(21) Application number: **07742321.8**

(22) Date of filing: **24.04.2007**

(51) Int Cl.:
***C08G 65/40*** *(2006.01)* ***H01B 1/06*** *(2006.01)*
***H01M 8/02*** *(2006.01)* ***H01M 8/10*** *(2006.01)*

(86) International application number:
**PCT/JP2007/058886**

(87) International publication number:
**WO 2007/125931 (08.11.2007 Gazette 2007/45)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **25.04.2006 JP 2006121082**

(71) Applicant: **JSR Corporation**
**Tokyo 104-0045 (JP)**

(72) Inventors:
- **YAMAKAWA, Yoshitaka**
  **Tokyo 104-0045 (JP)**
- **KONNO, Yousuke**
  **Tokyo 104-0045 (JP)**
- **GOTOU, Kouhei**
  **Tokyo 104-0045 (JP)**

(74) Representative: **TBK-Patent**
**Bavariaring 4-6**
**80336 München (DE)**

(54) **AROMATIC COMPOUND HAVING FLUORENE SKELETON AND POLYARYLENE HAVING SULFONIC ACID GROUP**

(57) Sulfonated polyarylenes have excellent processability and methanol resistance.

The polyarylene includes a structural unit (S) represented by Formula (2-2) below and a structural unit (T) represented by Formula (2-3) below, the structural unit (S) accounting for a proportion "s" of 95 to 50 mol%, the structural unit (T) accounting for a proportion "t" of 5 to 50 mol% ("s"+ "t" = 100 mol%) :

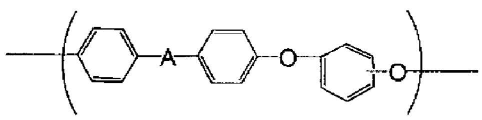

... (2-2)

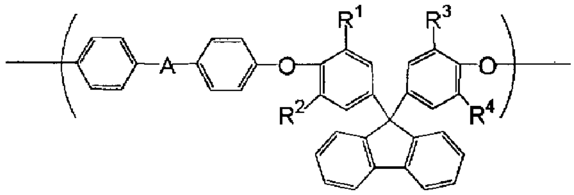

... (2-3)

wherein each A independently represents a divalent linking group represented by -CO- or -$SO_2$-; and $R^1$ to $R^4$ each independently represent a hydrogen atom, a fluorine atom, an alkyl group or an aryl group.

EP 2 011 812 A1

FIG. 1

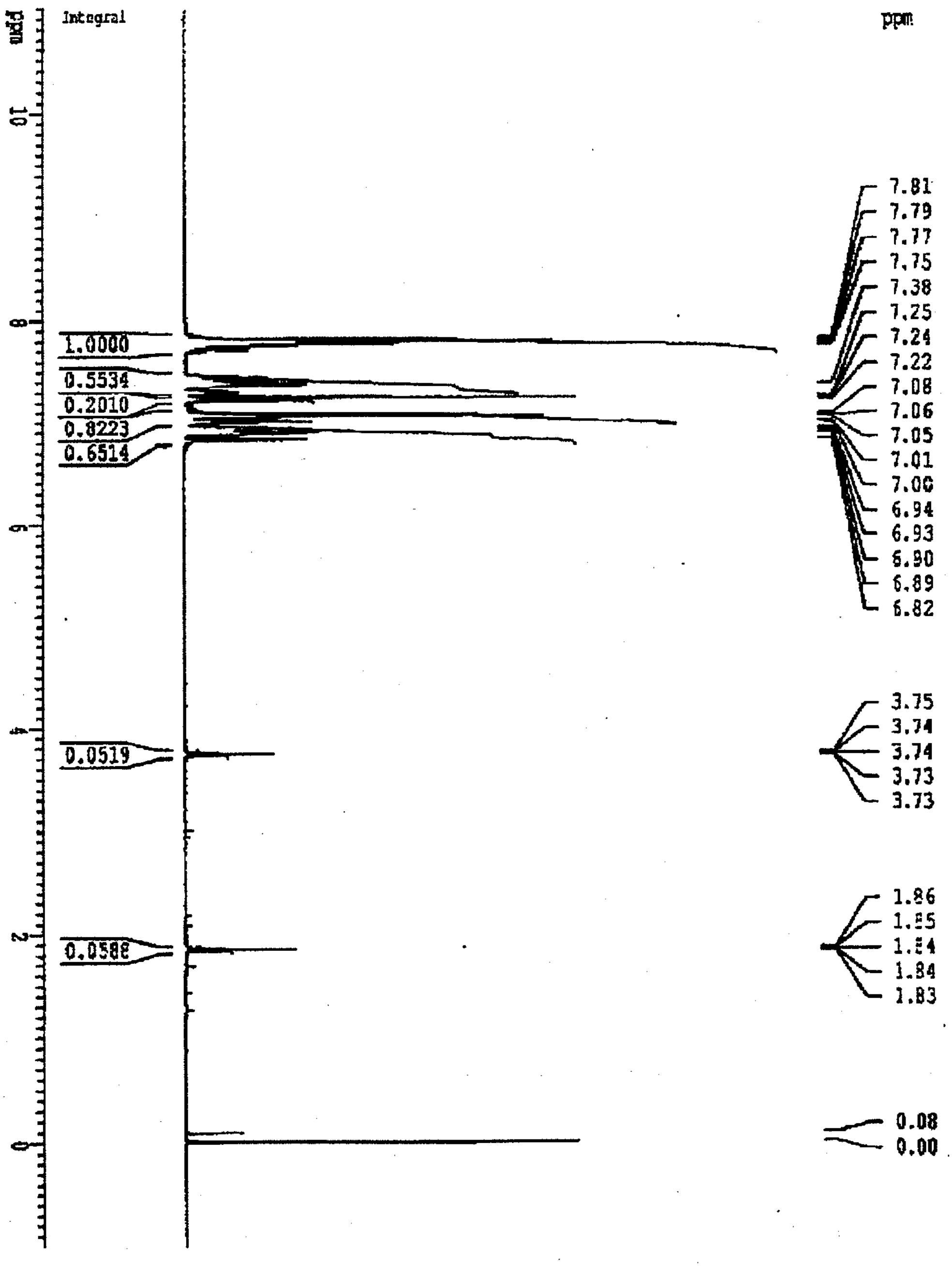
Integral
ppm
10
8
6
4
2
0
1.0000
0.5534
0.2010
0.8223
0.6514
0.0519
0.0588
ppm
7.81
7.79
7.77
7.75
7.38
7.25
7.24
7.22
7.08
7.06
7.05
7.01
7.00
6.94
6.93
6.90
6.89
6.82
3.75
3.74
3.74
3.73
3.73
1.86
1.85
1.84
1.84
1.83
0.08
0.00

**Description**

FIELD OF THE INVENTION

The present invention relates to sulfonated polyarylenes. More particularly, the invention relates to novel sulfonated polyarylenes that are obtained from an aromatic compound having a fluorene skeleton and are suitably used as solid polymer electrolytes and proton conductive membranes.

BACKGROUND OF THE INVENTION

Solid electrolytes have recently been used more often than electrolyte solutions such as aqueous solutions. This tendency is firstly because those solid electrolytes have good processability in application in electric and electronic materials, and secondly because of the transitions to overall size and weight reduction and electric power saving.

Inorganic and organic proton conductive materials are known in the art. As the inorganic materials, hydrates such as uranyl phosphate are used. However, it is difficult that the inorganic materials are enough contacted with substrate or electrode interface. As a result, many problems in forming a conductive layer on a substrate or an electrode are caused.

On the other hand, the organic materials include polymers that belong to cation exchange resins, with examples including sulfonated vinyl polymers such as polystyrenesulfonic acid; perfluoroalkylsulfonic acid polymers and perfluoroalkylcarboxylic acid polymers represented by Nafion® (manufactured by DuPont), Flemion and Aciplex; and polymers obtained by introducing sulfonic acid groups or phosphoric acid groups in heat resistant polymers such as polybenzimidazole and polyether ether ketone.

Of these, the perfluoroalkylsulfonic acid polymers possess high oxidation resistance and high proton conductivity and are widely used as fuel cell electrolyte membranes.

In the manufacturing of fuel cells, an electrolyte membrane of the perfluoroalkylsulfonic acid polymer is sandwiched between electrodes and heat processed by hot pressing or the like to give a membrane-electrode assembly. The fluorine-containing electrolyte membranes are thermally deformed at relatively low temperatures around 80°C and can be assembled easily.

However, the temperature of the electrolyte membranes can rise to 80°C or above by reaction heat during operation of the fuel cells. In this case, the electrolyte membrane is softened and creeps to cause short circuits between the electrodes, resulting in power generation failure. To prevent these problems, the thickness of the electrolyte membranes is increased to a certain level or fuel cells are designed such that the power generation temperature will not exceed 80°C. Consequently, the maximum output of power generation is limited.

Another problem with the perfluoroalkylsulfonic acid polymers is low methanol resistance. When the polymer is used in direct methanol fuel cells, the high methanol permeability lowers power generation efficiency and causes great dimensional changes of the membrane and separation of the electrodes. To avoid these problems, methanol is diluted and supplied as a very thin aqueous methanol solution. As a result, power generation efficiency is deteriorated.

To solve the problems with low thermal deformation temperature, poor mechanical characteristics at high temperatures and low methanol resistance, solid polymer electrolyte membranes that have aromatic polymers used in engineering plastics have been developed.

Patent Document 1 discloses solid polymer electrolytes comprising a rigid-rod sulfonated polyphenylene. The polymer is obtained by synthesizing a precursor polymer based on a structural unit that is derived from an aromatic compound composed of phenylene units, and then sulfonating the precursor polymer with a sulfonating agent.

The electrolyte membranes of this polymer have a thermal deformation temperature of 180°C or above and are excellent in creeping resistance at high temperatures. However, they require a very high temperature when assembled with electrodes by hot pressing. Long heating at high temperatures induces elimination reaction of the sulfonic acid groups, crosslinking among the sulfonic acid groups, and degradation of electrode layers. Further, they are poor in methanol resistance. Thus, the electrolyte membranes cannot be used as proton conductive membranes in direct methanol fuel cells.

Patent Document 2 discloses sulfonated polyarylenes that are obtained from an aromatic compound having a fluorene skeleton.

The polymers have improved methanol resistance but are unsatisfactory in assembling processability with electrodes.

Patent Document 1: U.S. Patent No. 5,403,675
Patent Document 2: JP-A-2004-137444

DISCLOSURE OF THE INVENTION

It is an object of the invention to provide sulfonated polyarylenes having excellent processability and methanol resistance.

The present inventors studied diligently and have found that the above object is achieved with polyarylenes that contain structural units derived from an aromatic compound which has specific structures at a specific ratio, and a structural unit having a sulfonic acid group.

An aromatic compound according to the present invention has ends each represented by Formula (1-1) below and comprises a structural unit (S) represented by Formula (1-2) below and a structural unit (T) represented by Formula (1-3) below, the structural unit (S) accounting for a proportion "s" of 95 to 50 mol%, the structural unit (T) accounting for a proportion "t" of 5 to 50 mol% ("s"+"t" = 100 mol%):

[Chem. 1]

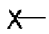
... (1-1)

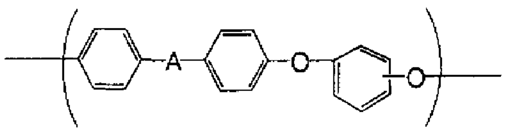
... (1-2)

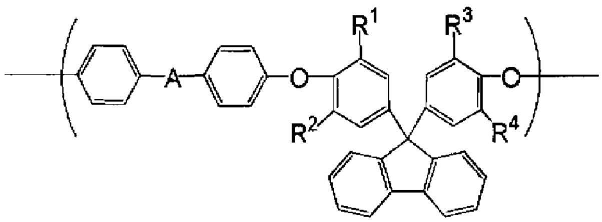
... (1-3)

wherein each A independently represents a divalent linking group represented by -CO- or $-SO_2-$; each X independently represents a halogen atom except fluorine; and $R^1$ to $R^4$ each independently represent a hydrogen atom, a fluorine atom, an alkyl group or an aryl group.

The aromatic compound preferably has a number average molecular weight of 500 to 50000.

A polyarylene according to the present invention comprises a structural unit (S) represented by Formula (2-2) below and a structural unit (T) represented by Formula (2-3) below, the structural unit (S) accounting for a proportion "s" of 95 to 50 mol%, the structural unit (T) accounting for a proportion "t" of 5 to 50 mol% ("s"+"t" = 100 mol%):

[Chem. 2]

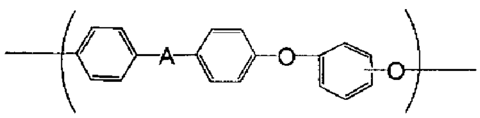
... (2-2)

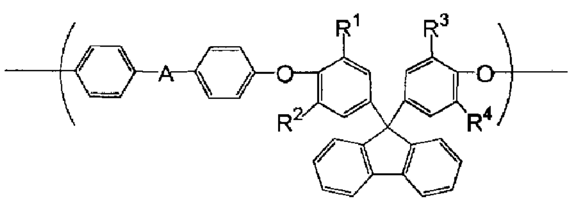
... (2-3)

wherein each A independently represents a divalent linking group represented by -CO- or $-SO_2-$; and $R^1$ to $R^4$ each independently represent a hydrogen atom, a fluorine atom, an alkyl group or an aryl group.
The polyarylene preferably further comprises a structural unit (U) represented by Formula (3-2) below:
[Chem. 3]

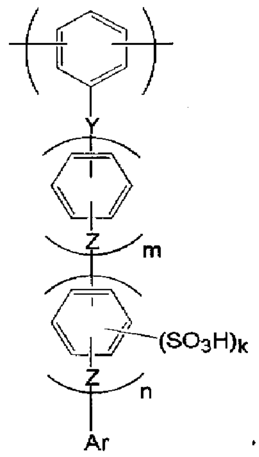

··· (3 − 2)

wherein Y is at least one divalent linking group selected from the group consisting of -CO-, $-SO_2-$, -SO-, -CONH-, -COO-, $-(CF_2)_p-$ (wherein p is an integer of 1 to 10) and $-C(CF_3)_2-$; each Z independently represents a direct bond or at least one divalent linking group selected from the group consisting of $-(CH_2)_p-$(wherein p is an integer of 1 to 10), $-C(CH_3)_2-$, -O- and -S-; Ar is an aromatic group with a sulfonic acid group; m is an integer of 0 to 10; n is an integer of 0 to 10; and k is an integer of 1 to 4.
A solid polymer electrolyte according to the present invention comprises the polyarylene.
A proton conductive membrane of the invention comprises the polyarylene.
A proton conductive membrane for direct methanol fuel cell according to the present invention comprises the polyarylene.

ADVANTAGES OF THE INVENTION

The polyarylenes according to the present invention contain specific highly hydrophobic units and specific highly flexible units in a specific ratio, whereby even if the sulfonic acid groups are introduced in a high concentration, the polyarylenes can give polymer electrolytes and proton conductive membranes that have high proton conductivity and excellent power generation performance as well as achieving good processability and methanol resistance.

BRIEF DESCRIPTION OF THE DRAWINGS

Fig. 1 is a $^1$H-NMR spectrum of compound (1-1).
Fig. 2 is a $^1$H-NMR spectrum of sulfonated polyarylene (1).
Fig. 3 is a $^1$H-NMR spectrum of compound (1-2).
Fig. 4 is a $^1$H-NMR spectrum of sulfonated polyarylene (2).
Fig. 5 is a $^1$H-NMR spectrum of compound (1-3).
Fig. 6 is a $^1$H-NMR spectrum of sulfonated polyarylene (3).

PREFERRED EMBODIMENTS OF THE INVENTION

Hereinbelow, the aromatic compounds, polyarylenes that contain structural units derived from the aromatic compounds, and polymer electrolytes and proton conductive membranes including the polyarylenes will be described in detail.

<Aromatic compounds with fluorene skeleton>

The aromatic compound according to the present invention has ends each represented by Formula (1-1) below and contains a structural unit (S) represented by Formula (1-2) below and a structural unit (T) represented by Formula (1-3) below. (In the specification, the aromatic compounds are also referred to as the compounds (1).) Polyarylenes that contain structural units derived from the compound (1) show methanol resistance because of the fluorene skeleton-containing hydrophobic structural unit (T) and achieve improved polymer's toughness, mechanical strength and processability due to the flexible structural unit (S).

[Chem. 4]

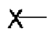 ... (1-1)

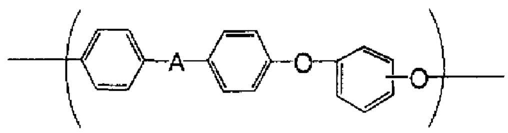 ... (1-2)

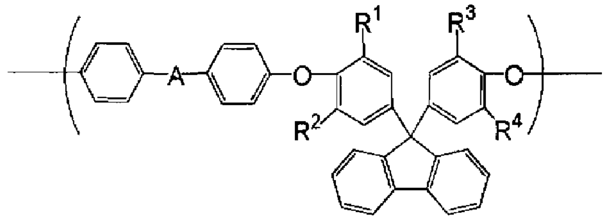 ... (1-3)

In Formulae (1-1) to (1-3), each A independently represents a divalent linking group represented by -CO- or $-SO_2-$. Of these, A is preferably -CO- from the viewpoint of processability of the obtainable polymer.

Each X independently represents a halogen atom except fluorine, that is, a chlorine atom, a bromine atom or an iodine atom. Of these, X is preferably a chlorine atom.

$R^1$ to $R^4$ each independently represent a hydrogen atom, a fluorine atom, an alkyl group or an aryl group.

The alkyl groups include methyl, ethyl, propyl, isopropyl, butyl, isobutyl, t-butyl, n-hexyl, n-octyl and 2-ethylhexyl groups. The aryl groups include phenyl, naphthyl and anthryl groups. Of these, $R^1$ to $R^4$ are each preferably a hydrogen atom, a methyl group or a phenyl group because a polyarylene obtainable from such compound (1) achieves excellent methanol resistance and water resistance as well as superior mechanical characteristics such as strength and toughness.

In the compounds (1), the structural unit (S) accounts for a proportion "s" of 95 to 50 mol%, preferably 90 to 60 mol%, and the structural unit (T) accounts for a proportion "t" of 5 to 50 mol%, preferably 10 to 40 mol% ("s"+"t" = 100 mol%). If t is less than 5, a polyarylene from the compound (1) tends to show lower methanol resistance and water resistance. If t exceeds 50, a polyarylene from the compound (1) tends to give membranes having poor mechanical characteristics or processability. That is, s and t in the above ranges ensure that a polyarylene from the compound (1) has excellent methanol resistance and hydrophobicity as well as superior mechanical strength such as toughness and processability.

The molecular weight of the compounds (1) is determined by gel permeation chromatography (GPC) with tetrahydrofuran (THF) as a solvent at 40°C. The number average molecular weight (Mn) relative to polystyrene standards

is in the range of 500 to 50000, preferably 1000 to 30000, and the weight average molecular weight (Mw) is in the range of 1000 to 100000, preferably 2000 to 60000.

Specific examples of the structural units (S) include:

[Chem. 5]

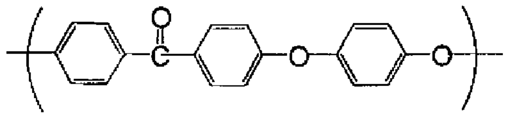

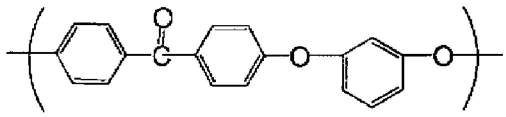

Specific examples of the structural units (T) include:

[Chem. 6]

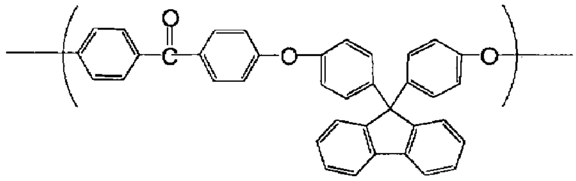

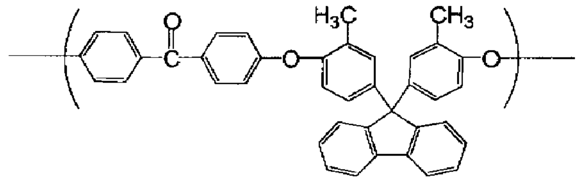

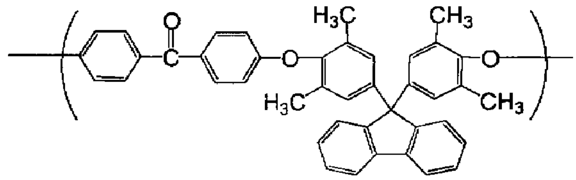

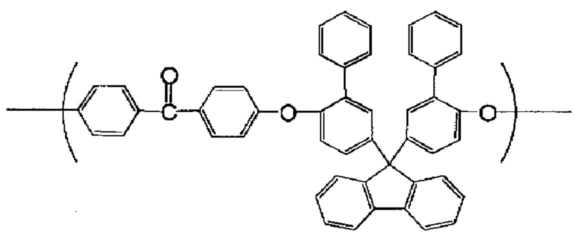

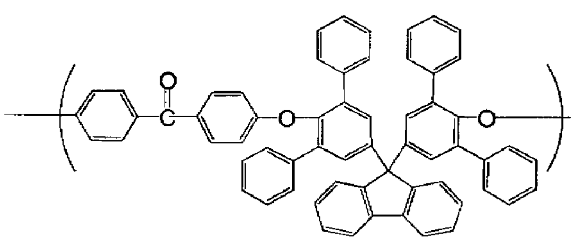

The compounds (1) may be used singly, or two or more kinds may be used in combination.

The compounds (1) may be synthesized by for example polymerizing a dihydroxybenzene and a fluorene-linked bisphenol (herein, these compounds are collectively referred to as the "bisphenols") together with 4,4'-dihalobenzophenone and/or 4,4'-dihalodiphenylsulfone (herein, these are collectively referred to as the "dihalides").

Examples of the dihydroxybenzenes include hydroquinone, resorcinol and catechol. Of these, hydroquinone and resorcinol are preferable, and resorcinol is more preferable because a polyarylene from the compound (1) achieves excellent toughness, mechanical strength and processability. The dihydroxybenzenes may be used singly, or two or more kinds may be used in combination.

Examples of the fluorene-linked bisphenols include 9,9-bis(4-hydroxyphenyl)fluorene, 9,9-bis(4-hydroxy-3-methylphenyl)fluorene, 9,9-bis(4-hydroxy-3-ethylphenyl)fluorene, 9,9-bis(4-hydroxy-3-n-propylphenyl)fluorene, 9,9-bis(4-hydroxy-3-isopropylphenyl)fluorene, 9,9-bis(4-hydroxy-3-t-butylphenyl)fluorene, 9,9-bis(4-hydroxy-3-isobutylphenyl)fluorene, 9,9-bis(4-hydroxy-3-n-butylphenyl)fluorene, 9,9-bis(4-hydroxy-3-phenylphenyl)fluorene, 9,9-bis(4-hydroxy-3-fluorophenyl)fluorene, 9,9-bis(4-hydroxy-3,5-dimethylphenyl)fluorene, 9,9-bis(4-hydroxy-3,5-diethylphenyl)fluorene, 9,9-bis(4-hydroxy-3,5-di-n-propylphenyl)fluorene, 9,9-bis(4-hydroxy-3,5-di-isopropylphenyl)fluorene, 9,9-bis(4-hydroxy-3,5-di-t-butylphenyl)fluorene, 9,9-bis(4-hydroxy-3,5-di-isobutylphenyl)fluorene, 9,9-bis(4-hydroxy-3,5-di-n-butylphenyl)fluorene and 9,9-bis(4-hydroxy-3,5-di-phenylphenyl)fluorene. These bisphenols may be used singly, or two or more kinds may be used in combination.

Examples of the 4,4'-dihalobenzophenones substituted with halogen atoms such as fluorine and chlorine include 4,4'-dichlorobenzophenone, 4,4'-difluorobenzophenone and 4-chloro-4'-fluorobenzophenone. Examples of the 4,4'-dihalodiphenylsulfones substituted with halogen atoms such as fluorine and chlorine include 4,4'-dichlorodiphenylsulfone and 4,4'-difluorodiphenylsulfone. Of these, the 4,4'-dihalobenzophenones are preferable. The dihalides may be used singly, or two or more kinds may be used in combination.

Synthesizing the compound (1) starts with converting the above bisphenols into an alkali metal salt. Here, it is desirable that the dihydroxybenzene is used at 95 to 50 mol%, preferably 90 to 60 mol%, and the fluorene-linked bisphenol is used at 5 to 50 mol%, preferably 10 to 40 mol%. (Here, the total of the dihydroxybenzene and the fluorene-linked bisphenol is 100 mol%.) To convert into alkaline salt, alkali compound such as an alkali metal, an alkali metal hydride, an alkali metal hydroxide or an alkali metal carbonate is added to the bisphenols in a polar solvent of high dielectric constant such as N-methyl-2-pyrrolidone, N,N-dimethylacetamide, sulfolane, diphenylsulfone or dimethyl sulfoxide. The alkali metal includes lithium, sodium and potassium.

The alkali compound is used in slight excess over the hydroxyl groups of the bisphenols, for example 1.1 to 2 times, preferably 1.2 to 1.5 times the equivalent weight of the hydroxyl groups contained in the dihydroxybenzene and the fluorene-linked bisphenol. Here, it is preferable that the reaction is accelerated by using a solvent that forms an azeotropic mixture with water, such as benzene, toluene, xylene, chlorobenzene or anisole.

Thereafter, the alkali metal salt of the bisphenols is reacted with the dihalide.

The amount of the dihalides used in the reaction (the total of the 4,4'-dihalobenzophenones and/or the 4,4'-dihalodiphenylsulfones) is 1.0001 to 3 times, preferably 1.001 to 2 times the molar amount of the bisphenols (the total of the dihydroxybenzenes and the fluorene-linked bisphenols).

To make sure that the compound (1) will be terminated with a chlorine atom at both ends, the reaction product may be further reacted by adding an excess of 4,4'-dichlorobenzophenone or 4-chloro-4'-fluorobenzophenone. For example, the dihalide may be added in an amount 0.01 to 3 times, preferably 0.05 to 2 times the molar amount of the bisphenols. In the case where 4,4'-difluorobenzophenone and/or 4,4'-difluorodiphenylsulfone is used, 4,4'-dichlorobenzophenone and/or 4-chloro-4'-fluorobenzophenone is preferably added at a later stage of the reaction to make sure that the compound (1) will be a dichloro compound.

The reaction temperature is in the range of 60 to 300°C, preferably 80 to 250°C. The reaction time ranges from 15 minutes to 100 hours, preferably from 1 to 24 hours.

The compound (1) obtained may be purified by general polymer purification methods such as dissolution and precipitation. The molecular weight of the compound (1) may be adjusted by controlling the molar ratio in the reaction between the dihalide and the phenols.

The structure of the compound (1) may be identified by $^1$H-NMR as follows. The structural unit (S) may be confirmed based on a signal at around 6.8 to 6.9 ppm, and the structural unit (T) based on a signal at around 7.25 to 7.35 ppm. The proportion "s" of the structural unit (S) and the proportion "t" of the structural unit (T) in the compound (1) may be obtained from an intensity ratio of the above signals.

The terminal structure may be identified by determining the halogen content such as chlorine, bromine or iodine by fluorescent X-ray analysis.

<Polyarylenes>

The polyarylene according to the present invention contains a structural unit (S) represented by Formula (2-2) below and a structural unit (T) represented by Formula (2-3) below. The polyarylene may further contain a structural unit derived from another monomer. That is, the polyarylene may be obtained by polymerizing at least one compound (1), or polymerizing at least one compound (1) with another monomer.

[Chem. 7]

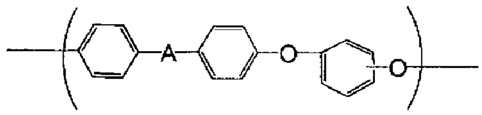

... (2-2)

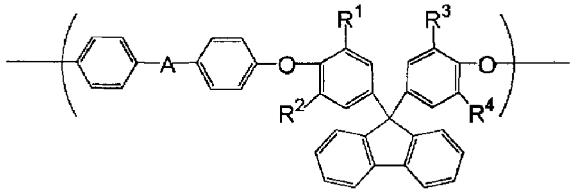

... (2-3)

In Formulae (2-2) and (2-3), A and $R^1$ to $R^4$ are as defined in Formulae (1-2) and (1-3) above.

In particular, A is preferably -CO- from the viewpoint of processability of the obtainable polymer, and $R^1$ to $R^4$ are each preferably a hydrogen atom, a methyl group or a phenyl group because the obtainable polyarylene achieves excellent methanol resistance and water resistance as well as superior mechanical characteristics such as strength and toughness.

In the polyarylene, the structural unit (S) account for a proportion "s" of 95 to 50 mol%, preferably 90 to 60 mol%, and the structural unit (T) account for a proportion "t" of 5 to 50 mol%, preferably 10 to 40 mol% ("s"+ "t" = 100 mol%). If t is less than 5, methanol resistance and water resistance tend to be low. If t exceeds 50, the obtainable polyarylene tends to give membranes having poor mechanical characteristics or processability. That is, s and t in the above ranges ensure that the polyarylene has excellent methanol resistance and hydrophobicity as well as superior mechanical strength such as toughness and processability.

Preferred examples of other structural units that may be included in the polyarylene include structural units having a sulfonic acid group as described in JP-A-2004-137444, JP-A-2004-345997, JP-A-2004-346163, JP-A-2001-342241 and JP-A-2002-293889. Structural units (U) represented by Formula (3-2) below are more preferable. The polyarylenes containing such structural units have a sulfonic acid group and are therefore suitably used as polymer electrolytes or proton conductive membranes. In particular, the polyarylene containing the structural unit (U) is preferable because it has excellent proton conductivity and methanol resistance.

[Chem. 8]

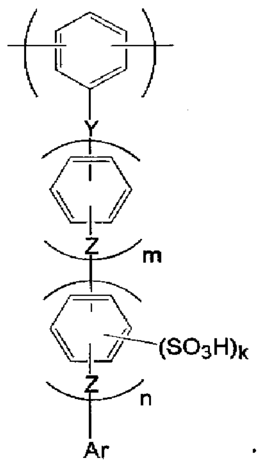

··· (3 − 2)

In Formula (3-2), Y is at least one divalent linking group selected from the group consisting of -CO-, $-SO_2-$, -SO-, -CONH-, -COO-, $-(CF_2)_p-$ (wherein p is an integer of 1 to 10) and $-C(CF_3)_2-$. Of these, Y is preferably -CO- or $-SO_2-$.

Each Z independently represents a direct bond or at least one divalent linking group selected from the group

consisting of $-(CH_2)_p-$ (wherein p is an integer of 1 to 10), $-C(CH_3)_2-$, -O- and -S-. Of these, Z is preferably a direct bond or -O-.

Ar is an aromatic group with a sulfonic acid group (a substituent represented by $-SO_3H$). Examples of the aromatic groups include phenyl, naphthyl, anthryl and phenanthryl groups, with phenyl and naphthyl groups being preferable.
The aromatic group contains at least one $-SO_3H$. When the aromatic group is a naphthyl group, it preferably has two or more $-SO_3H$.

The letter m is an integer of 0 to 10, preferably 0 to 2; n is an integer of 0 to 10, preferably 0 to 2; and k is an integer of 1 to 4.

Preferred combinations of m, n, k, Y, Z and Ar to obtain excellent properties of proton conductive membranes are:

(1) m = 0, n = 0, Y is -CO- and Ar is a phenyl group having at least one $-SO_3H$;
(2) m = 1, n = 0, Y is -CO-, Z is -O- and Ar is a phenyl group having at least one $-SO_3H$;
(3) m = 1, n = 1, k = 1, Y is -CO-, Z is -O- and Ar is a phenyl group having at least one $-SO_3H$; and
(4) m = 1, n = 0, Y is -CO-, Z is -O- and Ar is a naphthyl group having two $-SO_3H$.

The sulfonated polyarylene desirably contains the structural units (S) and (T) combined at 0.5 to 99.999 mol%, preferably 10 to 99.999 mol%, and the structural unit with a sulfonic acid group at 99.5 to 0.001 mol%, preferably 90 to 0.001 mol%, relative to all the structural units.

The sulfonated polyarylene may be produced for example by the following method (see JP-A-2004-137444). First, the compound (1) and a monomer having a sulfonate group are polymerized to give a polyarylene having a sulfonate group. (In the specification, this polyarylene is also referred to as the "precursor polymer (A)".) Next, the precursor polymer (A) is de-esterified to convert the sulfonate group into a sulfonic acid group. As a result, a polyarylene that contains the structural units (S) and (T) and the structural unit with a sulfonic acid group is obtained.

Examples of the monomers having a sulfonate group include sulfonates as described in JP-A-2004-137444, Japanese Patent Application No. 2003-143903 (JP-A-2004-345997) and Japanese Patent Application No. 2003-143904 (JP-A-2004-346163).

Of these, monomers represented by Formula (3-1) below are preferably used.

[Chem. 9]

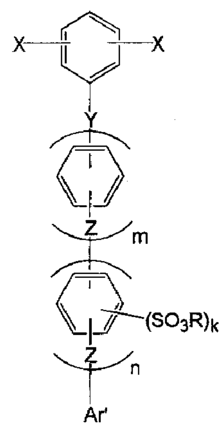

・・・(3−1)

In Formula (3-1), Y, Z, m, n and k are as defined in Formula (3-2) above inclusive of preferred embodiments thereof.

Each X represents a halogen atom other than fluorine, that is, a chlorine atom, a bromine atom or an iodine atom.

R is a hydrocarbon group of 4 to 20 carbon atoms. Specific examples include linear hydrocarbon groups, branched hydrocarbon groups, alicyclic hydrocarbon groups and five-membered heterocyclic hydrocarbon groups, such as tert-butyl, iso-butyl, n-butyl, sec-butyl, neopentyl, cyclopentyl, hexyl, cyclohexyl, cyclopentylmethyl, cyclohexylmethyl, adamantyl, adamantylmethyl, 2-ethylhexyl, bicyclo[2.2.1]heptyl, bicyclo[2.2.1]heptylmethyl, tetrahydrofurfuryl, 2-methylbutyl and 3,3-dimethyl-2,4-dioxolanemethyl groups. Of these, neopentyl, tetrahydrofurfuryl, cyclopentylmethyl, cyclohexylmethyl, adamantylmethyl and bicyclo[2.2.1]heptylmethyl groups are preferred, and neopentyl group is more

preferred.

Ar' is an aromatic group with a sulfonate group (a substituent represented by $-SO_3R$ wherein R is the same as described above inclusive of preferred examples thereof). Examples of the aromatic groups include phenyl, naphthyl, anthryl and phenanthryl groups, with phenyl and naphthyl groups being preferable.

The aromatic group contains at least one $-SO_3R$. When the aromatic group is a naphthyl group, it preferably has two or more $-SO_3R$.

For the production of the precursor polymer (A), the compound (1) is used at 0.5 to 99.999 mol%, preferably 10 to 99.999 mol%, and the monomer having a sulfonate group is used at 99.5 to 0.001 mol%, preferably 90 to 0.001 mol%, relative to all the monomers.

Polymerization for the precursor polymer (A) is carried out in the presence of a catalyst. The catalyst used herein contains a transition metal compound. The catalyst essentially contains (1) a transition metal salt and a compound that functions as a ligand (also referred to as the "ligand component"), or a transition metal complex (inclusive of copper salt) to which a ligand is coordinated, and (2) a reducing agent. A "salt" may be added to increase the polymerization rate. Specific examples of these catalyst components and amounts of the materials may be as described in JP-A-2001-342241.

Preferred polymerization conditions such as reaction solvents, concentrations, temperature and time are described in JP-A-2001-342241.

The precursor polymer (A) may be de-esterified by a method described in JP-A-2004-137444 to give the sulfonated polyarylene.

The sulfonated polyarylene synthesized as described above generally has an ion exchange capacity in the range of 0.3 to 5 meq/g, preferably 0.5 to 3 meq/g, more preferably 0.8 to 2.8 meq/g. If the ion exchange capacity is less than 0.3 meq/g, proton conductivity is low and power generation performance tends to be poor. If the capacity exceeds 5 meq/g, water resistance and methanol resistance tend to be drastically deteriorated.

The ion exchange capacity may be controlled for example by changing the types, amounts and combination of the monomers (specifically, the compound (1) and other monomers such as the monomer of Formula (3-1)). The ion exchange capacity may be determined by a method described later.

The molecular weight of the sulfonated polyarylene may be determined by gel permeation chromatography (GPC) at 40°C using an eluting solution consisting of N-methyl-2-pyrrolidone (NMP) mixed with lithium bromide and phosphoric acid. The number average molecular weight (Mn) relative to polystyrene standards is in the range of 5000 to 500000, preferably 10000 to 400000, and the weight average molecular weight (Mw) is in the range of 10000 to 1000000, preferably 20000 to 800000.

<Solid polymer electrolytes>

The solid polymer electrolyte according to the invention comprises the above-described sulfonated polyarylene. It may further contain an antioxidant such as a phenolic hydroxyl group-containing compound, an amine compound, an organophosphorus compound or an organosulfur compound, without adversely affecting the proton conductivity.

The solid polymer electrolyte may be used in various forms including particles, fibers and membranes, as required depending on application. For example, membranes (generally called proton conductive membranes) are desirable in the case of electrochemical devices such as fuel cells and water hydrolysis devices.

<Proton conductive membranes>

The proton conductive membrane of the invention is made from the solid polymer electrolyte comprising the sulfonated polyarylene. Production of the proton conductive membranes may involve, together with the solid polymer electrolyte, inorganic acids such as sulfuric acid and phosphoric acid, organic acids including carboxylic acids, an appropriate amount of water, and the like.

For example, the proton conductive membrane may be produced by a casting method in which the sulfonated polyarylene dissolved in a solvent is flow-cast over a substrate to form a film.

The substrate used herein is not particularly limited and may be selected from those substrates commonly used in the solution casting methods. Examples thereof include plastic substrates and metal substrates. Preferably, thermoplastic resin substrates such as polyethyleneterephthalate (PET) films are used.

The solvents to dissolve the sulfonated polyarylene include aprotic polar solvents such as N-methyl-2-pyrrolidone, N,N-dimethylformamide, γ-butyrolactone, N,N-dimethylacetamide, dimethylsulfoxide, dimethylurea and dimethylimidazolidinone. In view of solvent properties (property capable dissolving the solutes) and solution viscosity, N-methyl-2-pyrrolidone (also "NMP") is preferable. The aprotic polar solvents may be used singly, or two or more kinds may be used in combination.

The solvent for dissolving the sulfonated polyarylene polymer may be a mixed solvent of the above aprotic

polar solvent and an alcohol. Exemplary alcohols include methanol, ethanol, propyl alcohol, iso-propyl alcohol, sec-butyl alcohol and tert-butyl alcohol. In particular, methanol is preferable because it ensures an appropriately low solution viscosity over a wide range of proportions of the polymer. These alcohols may be used singly, or two or more kinds may be used in combination.

The above mixed solvent may desirably contain the aprotic polar solvent in an amount of 95 to 25 wt%, preferably 90 to 25 wt%, and the alcohol in an amount of 5 to 75 wt%, preferably 10 to 75 wt% (the total of the aprotic polar solvent and the alcohol is 100 wt%). This proportion of the alcohol leads to an appropriately low solution viscosity.

Although the concentration of the sulfonated polyarylene in the solution depends on the molecular weight of the polyarylene, it is generally from 5 to 40 wt%, preferably from 7 to 25 wt%. The concentration less than 5 wt% causes difficulties in producing the membranes in large thickness and results in easy occurrence of pinholes. If the concentration exceeds 40 wt%, the solution viscosity becomes so high that the film production will be difficult and further that the obtained films tend to have low surface smoothness.

The solution viscosity may vary depending on the molecular weight or the concentration of the sulfonated polyarylene. Generally, it ranges from 2,000 to 100,000 mPa·s, preferably from 3, 000 to 50, 000 mPa·s. If the viscosity is less than 2, 000 mPa·s, the solution will have too high a fluidity and may spill out of the substrate during the membrane production. The viscosity over 100,000 mPa·s is so high that the solution cannot be extruded through a die and the flow-casting for the film production may be difficult.

The wet film obtained as described above may be soaked into water to substitute the organic solvent in the film with water. This treatment reduces the amount of the residual solvent in the obtainable proton conductive membrane. Prior to the soaking into water, the wet film may be predried. The predrying may be performed by holding the wet film at 50 to 150°C for 0.1 to 10 hours.

Soaking the wet films in water may be carried out batchwise with respect to each film, or may be a continuous process wherein the films, which may be in the original form of laminates on the substrate film (e.g. PET film) as produced or which may be released from the substrate, are soaked in water and then wound sequentially. In the batchwise soaking, the films are suitably framed or fixed by similar means to prevent wrinkles from forming on the surface of the treated films.

The soaking may be suitably made so that the wet films will contact water that is at least 10 parts by weight, preferably at least 30 parts by weight based on 1 part by weight of the wet films. This contact ratio is suitably kept as large as possible to minimize the amount of the solvent remaining in the obtainable proton conductive membrane. In order to reduce the residual solvent amount in the proton conductive membrane, it is also effective to keep the concentration of the organic solvent in water at or below a certain level by renewing the water used in the soaking or by overflowing water. The in-plane distribution of the organic solvent within the proton conductive membrane may be uniformed by homogenizing the organic solvent concentration in water by stirring or the like.

When the wet film is soaked in water, the water temperature is preferably from 5 to 80°C. Although the substitution between the organic solvent and water takes place at a higher rate as the temperature rises, the water absorption of the film will also increase at higher temperatures. Consequently, the proton conductive membrane may have a rough surface after dried. In general, the water temperature is suitably 10 to 60°C from the viewpoints of substitution rate and easy handling. The soaking time varies depending on the initial amount of the residual solvent, the contact ratio and the treatment temperature. Generally, the soaking time ranges from 10 minutes to 240 hours, preferably from 30 minutes to 100 hours.

By drying the water-soaked film, a proton conductive membrane is obtained which has a reduced amount of the residual solvent. The amount of the residual solvent in the proton conductive membrane is generally not more than 5 wt%. Controlling the soaking conditions enables reduction of the residual solvent down to 1 wt% or less of the proton conductive membrane. For example, this is possible when the wet film is soaked in water that is at least 50 parts by weight based on 1 part by weight of the wet film, at a water temperature of 10 to 60°C for 10 minutes to 10 hours.

After the wet film is soaked in water as described above, the film is dried at 30 to 100°C, preferably 50 to 80°C, for 10 to 180 minutes, preferably 15 to 60 minutes. Subsequently, it is vacuum dried at 50 to 150°C and preferably at 500 to 0.1 mm Hg for 0.5 to 24 hours. The proton conductive membrane according to the invention may be thus obtained.

The proton conductive membranes obtained by the above method range in dry thickness from 10 to 100 μm, preferably from 20 to 80 μm.

The proton conductive membrane may contain an anti-aging agent, preferably a hindered phenol compound with a molecular weight of not less than 500. Such anti-aging agents provide longer durability of the proton conductive membrane.

The hindered phenol compounds employable in the invention include triethylene glycol-bis[3-(3-t-butyl-5-methyl-4-hydroxyphenyl) propionate] (trade name: IRGANOX 245), 1,6-hexanediol-bis[3-(3,5-di-t-butyl-4-hydroxyphenyl) propionate] (trade name: IRGANOX 259)', 2,4-bis-(n-octylthio)-6-(4-hydroxy-3,5-di-t-butylanilino)-3 ,5-triadine (trade name: IRGANOX 565), pentaerythrithyl-tetrakis[3-(3,5-di-t-butyl-4-hydroxyphenyl)propionate] (trade name: IRGANOX 1010), 2,2-thio-diethylene bis[3-(3,5-di-t-butyl-4-hydroxyphenyl)propionate] (trade name: IRGANOX 1035), octadecyl-3-(3,5-di-t-butyl-4-hydroxyphenyl)propionate] (trade name: IRGANOX 1076), N,N-hexamethylenebis (3,5-di-t-butyl-4-hydroxy-hydrocinnamide) (trade name: IRGANOX 1098), 1,3,5-trimethyl-2,4,6-tris(3,5-di-t-butyl-4-hydroxybenzyl)benzene (trade name: IRGANOX 1330), tris-(3,5-di-t-butyl-4-hydroxybenzyl)-isocyanurate (trade name: IRGANOX 3114) and 3,9-bis[2-[3-(3-t-butyl-4-hydroxy-5-methylphenyl)propionyloxy]-1,1-dimethylethyl]-2,4,8,10-tetraoxaspiro[5.5]undecane (trade name: Sumilizer GA-80).

The hindered phenol compound with 500 or more molecular weight may be preferably used in an amount of 0.01 to 10 parts by weight based on 100 parts by weight of the sulfonated polyarylene.

The proton conductive membranes of the invention may be suitably used as electrolytes for primary and secondary batteries, solid polymer electrolytes for fuel cells, and other proton conductive membranes for display elements, sensors, signaling media, solid condensers and ion exchange membranes.

Further, because the polyarylene containing the structural units (S), (T) and (U) has excellent methanol resistance, the proton conductive membranes of the invention are particularly suited for use as solid polymer electrolytes or proton conductive membranes for direct methanol fuel cells.

[Examples]

The present invention will be described based on Examples below without limiting the scope of the invention.

<Analytical methods>

Compounds (1) and sulfonated polyarylenes were analyzed by the following methods.

(Molecular weight)

The number average molecular weight and weight average molecular weight of the compounds (1) were determined by gel permeation chromatography (GPC) at 40°C using tetrahydrofuran (THF) as a solvent relative to polystyrene standards.

The weight average molecular weight of the sulfonated polyarylenes was determined by gel permeation chromatography (GPC) relative to polystyrene standards at 40°C using an eluting solution consisting of N-methyl-2-pyrrolidone (NMP) mixed with lithium bromide and phosphoric acid.

(Ion exchange capacity)

The sulfonated polyarylene was sufficiently washed with water until the pH of the washings became 4 to 6, and free residual acids were removed. The polyarylene was then dried. A predetermined amount of the polyarylene was weighed out and dissolved in a THF/water mixed solvent. The solution mixed with phenolphthalein as an indicator was titrated with a NaOH standard solution to obtain a point of neutralization, from which the ion exchange capacity was determined.

(Structure analysis)

The structures of the compounds (1) and the sulfonated polyarylenes were identified by $^1$H-NMR as follows. The structural unit (S) was confirmed based on a signal at around 6.8 to 6.9 ppm, and the structural unit (T) based on a signal at around 7.25 to 7.35 ppm. The proportion "s" of the structural unit (S) and the proportion "t" of the structural unit (T) were obtained from an intensity ratio of these peaks.

The structural unit (U) was confirmed and quantitatively determined by measuring the ion exchange capacity.

[Example 1-1] Synthesis of compound (1-1)

A 3-liter separable four-necked flask equipped with a stirring blade, a thermometer, a nitrogen inlet tube, a Dean-Stark tube and a condenser tube was charged with 92.76 g (265 mmol) of 9,9-bis(4-hydroxyphenyl)fluorene (BPFL), 87.44 g (794 mmol) of resorcinol (Res), 205.36 g (941 mmol) of 4,4'-difluorobenzophenone (DFBP), 52.45 g (224 mmol) of 4-chloro-4'-fluorobenzophenone (CFBP) and 175.61 g (1271 mmol) of potassium carbonate. Subsequently, 1250 mL of N,N-dimethylacetamide (DMAc) and 500 mL of toluene were added. The mixture was heated to 155°C. Water resulting from the reaction was formed into an azeotropic mixture with toluene and was removed through the Dean-Stark tube. The reaction was carried out for 3 hours until water almost ceased to occur. While the toluene was removed from the reaction system, the temperature was increased to 165°C and the reaction liquid was stirred for 5 hours at 160 to 165°C. Thereafter, 30.37 g (129 mmol) of CFBP was added, and the mixture was stirred for 3 hours at 160 to 165°C.

The reaction solution was poured in small portions to 5.0 L of methanol to precipitate the reaction product, followed by stirring for 1 hour. The liquid containing the precipitate was filtered to collect the precipitate, which was washed with a small amount of methanol. The precipitate was combined with 5.0 L of methanol and washed with stirring. This washing was repeated three times. The resultant product was dried to give 347 g of an objective compound (compound (1-1)) (88% yield).

According to GPC, the compound (1-1) had a number average molecular weight and a weight average molecular weight relative to polystyrene standards of 4100 and 6600, respectively. A $^{1}$H-NMR spectrum is shown in Fig. 1. The compound (1-1) contained structural units (S-1) and (T-1) represented by the following formulae, with the structural unit (S-1) accounting for a proportion "s1" of 75 mol% and the structural unit (T-1) accounting for a proportion "t1" of 25 mol%.

The compound (1-1) was terminated with a chlorine atom at both ends.

[Example 1-2] Synthesis of sulfonated polyarylene (1)

A 0.5-liter flask equipped with a stirrer, a thermometer and a nitrogen inlet tube was charged with 18.2 g (45.3 mmol) of neopentyl 3-(2,5-dichlorobenzoyl)benzenesulfonate, 22.5 g (5.5 mmol) of the compound (1-1) from Example 1-1, 1.00 g (1.5 mmol) of bis (triphenylphosphine) nickel dichloride, 0.23 g (1.52 mmol) of sodium iodide, 5.33 g (20.3 mmol) of triphenylphosphine and 7.97 g (122 mmol) of zinc. The flask was then purged with dry nitrogen. Subsequently, 100 mL of DMAc was added to the flask, and stirring was performed for 3 hours while maintaining the reaction temperature at 80°C. The reaction liquid was then diluted with 100 mL of DMAc, and insolubles were filtered.

The resultant solution containing a precursor polymer (A) was placed in a 1-liter flask equipped with a stirrer, a thermometer and a nitrogen inlet tube, and was heated to 115°C with stirring. Subsequently, 11.8 g (136.0 mmol) of lithium bromide was added, followed by stirring for 7 hours. The resultant solution was poured into 1 L of water to precipitate the product. The product was sequentially washed with acetone, a 10% aqueous sulfuric acid solution and pure water in this order, and was dried to give 27 g of an objective sulfonated polyarylene (1). The polymer had a weight average molecular weight (Mw) of 110000. A $^{1}$H-NMR spectrum is shown in Fig. 2. The polymer contained structural units (S-1) to (U-1) represented by the following formulae. The proportion "s1" of the structural unit (S-1) was estimated to be 75 mol%, and the proportion "t1" of the structural unit (T-1) was estimated to be 25 mol%, relative to the total of the structural units (S-1) and (T-1). The total of the structural units (S-1) and (T-1) was estimated to be 11 mol%, and the proportion of the structural unit (U-1) was estimated to be 89 mol%, relative to all the structural units. The ion exchange capacity was 1.3 meq/g.

[Chem. 10]

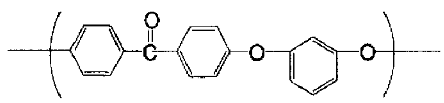
...(S-1)

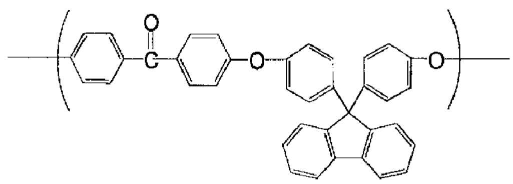
...(T-1)

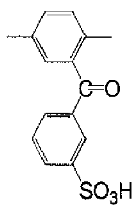
...(U-1)

[Example 1-3] Production of proton conductive membrane (1)

A 15 wt% N-methylpyrrolidone (NMP) solution of the sulfonated polyarylene (1) was cast over a glass plate to give a film (1) with a thickness of 40 μm.

[Example 2-1] Synthesis of compound (1-2)

The procedures until the stirring for 5 hours at 160 to 165°C were carried out in the same manner as in Example 1-1, except that the 3-liter separable four-necked flask was charged with 36.71 g (105 mmol) of BPFL, 103.82 g (943 mmol) of Res, 207.81 g (952 mmol) of DFBP, 42.46 g (181 mmol) of CFBP and 173.75 g (1257 mmol) of potassium carbonate, and thereafter 1250 mL of DMAc and 500 mL of toluene were added. Subsequently, 24.58 g (105 mmol) of CFBP was added, and the mixture was stirred for 3 hours at 160 to 165°C.

The reaction solution obtained was treated in the same manner as in Example 1-1 to afford 300 g of an objective compound (compound (1-2)) (86% yield).

The compound (1-2) had a number average molecular weight and a weight average molecular weight of 4600 and 6900, respectively. A $^1$H-NMR spectrum is shown in Fig. 3. The compound (1-2) contained structural units (S-2) and (T-2) represented by the following formulae, with the structural unit (S-2) accounting for a proportion "s2" of 90 mol% and the structural unit (T-2) accounting for a proportion "t2" of 10 mol%.

The compound (1-2) was terminated with a chlorine atom at both ends.

[Example 2-2] Synthesis of sulfonated polyarylene (2)

A sulfonated polyarylene (2) weighing 26 g was obtained in the same manner as in Example 1-2, except that 25.3 g (5.51 mmol) of the compound (1-2) from Example 2-1 was used. The polymer had a weight average molecular weight (Mw) of 115000. A $^1$H-NMR spectrum is shown in Fig. 4. The polymer contained structural units (S-2) to (U-2) represented by the following formulae. The proportion "s2" of the structural unit (S-2) was estimated to be 90 mol%, and the proportion "t2" of the structural unit (T-2) was estimated to be 10 mol%, relative to the total of the structural units (S-2) and (T-2). The total of the structural units (S-2) and (T-2) was estimated to be 11 mol%, and the proportion of the structural unit (U-2) was estimated to be 89 mol%, relative to all the structural units. The ion exchange capacity was 1.2 meq/g.

[Chem. 11]

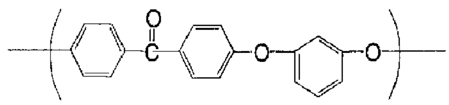
...(S-2)

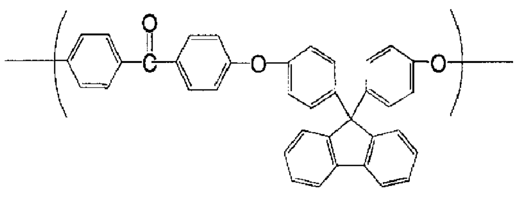
...(T-2)

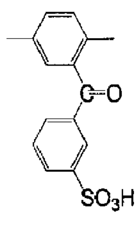
...(U-2)

[Example 2-3] Production of proton conductive membrane (2)

A 15 wt% N-methylpyrrolidone (NMP) solution of the sulfonated polyarylene (2) was cast over a glass plate to give a film (2) with a thickness of 40 μm.

[Example 3-1] Synthesis of compound (1-3)

The procedures until the stirring for 5 hours at 160 to 165°C were carried out in the same manner as in Example 1-1, except that the 3-liter separable four-necked flask was charged with 37.40 g (107 mmol) of BPFL, 21.83 g (198 mmol) of Res, 59.15 g (271 mmol) of DFBP, 15.11 g (64.4 mmol) of CFBP and 50.57 g (366 mmol) of potassium carbonate, and thereafter 360 mL of DMAc and 145 mL of toluene were added. Subsequently, 8.75 g (37.3 mmol) of CFBP was added, and the mixture was stirred for 3 hours at 160 to 165°C.

The reaction solution obtained was treated in the same manner as in Example 1-1 to afford 100 g of an objective compound (compound (1-3)) (80% yield).

The compound (1-3) had a number average molecular weight and a weight average molecular weight of 4300 and 6800, respectively. A $^1$H-NMR spectrum is shown in Fig. 5. The compound (1-3) contained structural units (S-3) and (T-3) represented by the following formulae, with the structural unit (S-3) accounting for a proportion "s3" of 65 mol% and the structural unit (T-3) accounting for a proportion "t3" of 35 mol%.

The compound (1-3) was terminated with a chlorine atom at both ends.

[Example 3-2] Synthesis of sulfonated polyarylene (3)

A sulfonated polyarylene (3) weighing 26 g was obtained in the same manner as in Example 1-2, except that 20.2 g (4.7 mmol) of the compound (1-3) from Example 3-1 was used. The polymer had a weight average molecular weight (Mw) of 115000. A $^1$H-NMR spectrum is shown in Fig. 6. The polymer contained structural units (S-3) to (U-3) represented by the following formulae. The proportion "s3" of the structural unit (S-3) was estimated to be 65 mol%, and the proportion "t3" of the structural unit (T-3) was estimated to be 35 mol%, relative to the total of the structural units (S-3) and (T-3). The total of the structural units (S-3) and (T-3) was estimated to be 9 mol%, and the proportion of the structural unit (U-3) was estimated to be 91 mol%, relative to all the structural units. The ion exchange capacity was 1.4 meq/g.

[Chem. 12]

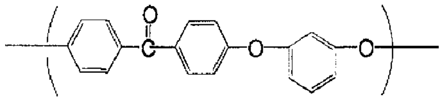

...(S-3)

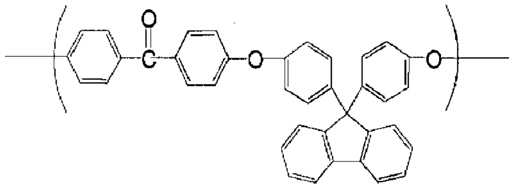

...(T-3)

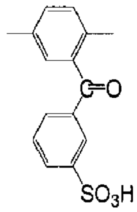

...(U-3)

[Example 3-3] Production of proton conductive membrane (3)

A 15 wt% N-methylpyrrolidone (NMP) solution of the sulfonated polyarylene (3) was cast over a glass plate to give a film (3) with a thickness of 40 μm.

[Comparative Example 1-1] Synthesis of compound (1-4)

The procedures until the stirring for 5 hours at 160 to 165°C were carried out in the same manner as in Example 1-1, except that the 3-liter separable four-necked flask was charged with 0 g (0 mmol) of BPFL, 16.15 g (147 mmol) of Res, 29.09 g (133 mmol) of DFBP, 5.94 g (25 mmol) of CFBP and 24.32 g (176 mmol) of potassium carbonate, and thereafter 175 mL of DMAc and 70 mL of toluene were added. Subsequently, 3.44 g (15 mmol) of CFBP was added, and the mixture was stirred for 3 hours at 160 to 165°C.

The reaction solution obtained was treated in the same manner as in Example 1-1 to afford 40 g of an objective compound (compound (1-4)) (88% yield).

The compound (1-4) had a number average molecular weight and a weight average molecular weight of 5500 and 8250, respectively. The compound (1-4) contained a structural unit (S-4) represented by the following formula.

The compound (1-4) was terminated with a chlorine atom at both ends.

[Comparative Example 1-2] Synthesis of sulfonated polyarylene (4)

A sulfonated polyarylene (4) weighing 32 g was obtained in the same manner as in Example 1-2, except that 25.7 g (4.7 mmol) of the compound (1-4) from Comparative Example 1-1 was used. The polymer had a weight average molecular weight (Mw) of 135000. The polymer contained structural units (S-4) and (U-4) represented by the following formulae. The proportion of the structural unit (S-4) was estimated to be 9 mol%, and the proportion of the structural unit (U-4) was estimated to be 91 mol%, relative to all the structural units. The ion exchange capacity was 1.2 meq/g.

[Chem. 13]

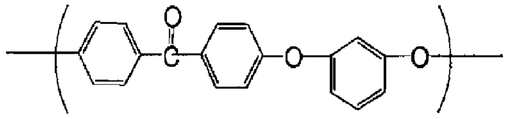

...(S-4)

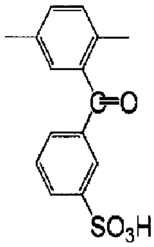

...(U-4)

[Comparative Example 1-3] Production of proton conductive membrane (4)

A 15 wt% N-methylpyrrolidone (NMP) solution of the sulfonated polyarylene (4) was cast over a glass plate to give a film (4) with a thickness of 40 μm.

[Comparative Example 2-1] Synthesis of compound (1-5)

The procedures until the stirring for 5 hours at 160 to 165°C were carried out in the same manner as in Example 1-1, except that the 3-liter separable four-necked flask was charged with 51.39 g (147 mmol) of BPFL, 0 g (0 mmol) of Res, 29.09 g (133 mmol) of DFBP, 5.94 g (25 mmol) of CFBP and 24.32 g (176 mmol) of potassium carbonate, and thereafter 175 mL of DMAc and 70 mL of toluene were added. Subsequently, 3.44 g (15 mmol) of CFBP was added, and the mixture was stirred for 3 hours at 160 to 165°C.

The reaction solution obtained was treated in the same manner as in Example 1-1 to afford 70 g of an objective compound (compound (1-5)) (87% yield).

The compound (1-5) had a number average molecular weight and a weight average molecular weight of 3500 and 5250, respectively. The compound (1-5) contained a structural unit (T-5) represented by the following formula.

The compound (1-5) was terminated with a chlorine atom at both ends.

[Comparative Example 2-2] Synthesis of sulfonated polyarylene (5)

A sulfonated polyarylene (5) weighing 25 g was obtained in the same manner as in Example 1-2, except that 16.2 g (4.6 mmol) of the compound (1-5) from Comparative Example 2-1 was used. The polymer had a weight average molecular weight (Mw) of 105000. The polymer contained structural units (T-5) and (U-5) represented by the following formulae. The proportion of the structural unit (T-5) was estimated to be 9 mol%, and the proportion of the structural unit (U-5) was estimated to be 91 mol%, relative to all the structural units. The ion exchange capacity was 1.6 meq/g.

[Chem. 14]

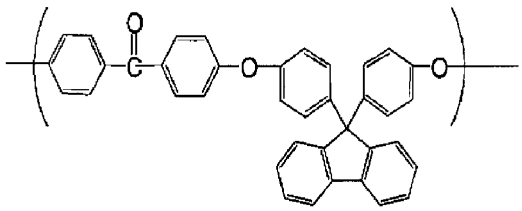

...(T-5)

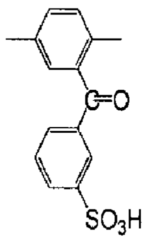

...(U-5)

[Comparative Example 2-3] Production of proton conductive membrane (5)

A 15 wt% N-methylpyrrolidone (NMP) solution of the sulfonated polyarylene (5) was cast over a glass plate to give a film (5) with a thickness of 40 μm.

<Evaluation of properties>

The films (proton conductive membranes) (1) to (5) obtained in Examples 1-3 to 3-3 and Comparative Examples 1-3 and 2-3 were tested by the following methods to evaluate properties. The results are shown in Table 1.

(Aqueous methanol solution soaking test)

The proton conductive membrane was soaked in a 64 wt% aqueous methanol solution at 60°C for 6 hours. The area was measured before and after the soaking to obtain an area percentage change (%).

$$\text{Area percentage change (\%)} = (\text{Area after soaking/area before soaking}) \times 100\ (\%)$$

(Methanol permeability)

Methanol permeability was measured by pervaporation method. The proton conductive membrane was set in a predetermined cell and a 30 wt% aqueous methanol solution was supplied on the upper surface. The solution was suctioned from the back surface, and the liquid that penetrated the membrane was trapped with liquid nitrogen. The quantity of methanol permeation was calculated from the following equation:

$$\text{Methanol permeation quantity } (g/m^2/h) = [\text{weight of penetrating liquid } (g)/\text{collecting time } (h)/\text{sample area } (m^2)] \times \text{methanol concentration of penetrating liquid}$$

(Measurement of membrane resistance)

The proton conductive membrane was sandwiched between conductive carbon plates through 1 mol/L sulfuric acid, and the alternating current resistance between the carbon plates was measured at room temperature. The membrane resistance was determined from the following equation:

$$\text{Membrane resistance } (\Omega\cdot cm^2) = [\text{resistance } (\Omega) \text{ between carbon plates through membrane} - \text{blank } (\Omega)] \times \text{contact area } (cm^2)$$

(Electrode joining properties)

Commercially available carbon electrodes and the proton conductive membrane were pressed at 75 kg/cm$^2$ and 140°C for 5 minutes. The assembly was soaked in a 10 wt% aqueous methanol solution for 24 hours, and the bonding of the electrodes was visually inspected.

AA: No separation, CC: Separation

[Table 1]

| | | Ex. 1-3 | Ex. 2-3 | Ex. 3-3 | Comp. Ex. 1-3 | Comp. Ex. 2-3 |
|---|---|---|---|---|---|---|
| Film | - | (1) | (2) | (3) | (4) | (5) |
| Area percentage change | % | 140 | 150 | 130 | 210 | 110 |
| Methanol permeability | g/m$^2$/h | 200 | 250 | 150 | 300 | 130 |
| Membrane resistance | $\Omega\cdot$cm$^2$ | 0.20 | 0.15 | 0.23 | 0.12 | 0.25 |
| Tg | °C | 160 | 140 | 170 | 100 | 280 |
| Electrode joining properties | - | AA | AA | AA | AA | CC |

The results of Examples 1-3 to 3-3 show that the films (1) to (3) that contained the polyarylene having the specific structural units in the specific ratio achieved excellent electrode joining properties as well as low methanol permeability, low membrane resistance and good dimensional stability with aqueous methanol solution. In contrast, the results of Comparative Examples 1-3 and 2-3 indicate that polyarylenes that do not contain the specific structural units in the specific ratio give a film in which electrode joining properties are excellent and membrane resistance is low but methanol resistance is poor (Comparative Example 1-3), or a film in which methanol resistance is good but membrane resistance is high and electrode joining properties are bad (Comparative Example 2-3).

## Claims

**1.** An aromatic compound which has ends each represented by Formula (1-1) below and comprises a structural unit (S) represented by Formula (1-2) below and a structural unit (T) represented by Formula (1-3) below, the structural unit (S) accounting for a proportion "s" of 95 to 50 mol%, the structural unit (T) accounting for a proportion "t" of 5 to 50 mol% ("s"+ "t" = 100 mol%) :

[Chem. 1]

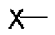 ... (1-1)

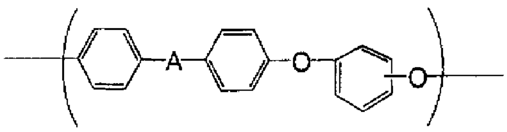 ... (1-2)

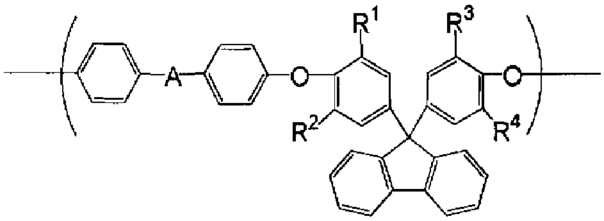 ... (1-3)

wherein each A independently represents a divalent linking group represented by -CO- or -$SO_2$-; each X independently represents a halogen atom except fluorine; and $R^1$ to $R^4$ each independently represent a hydrogen atom, a fluorine atom, an alkyl group or an aryl group.

2. The aromatic compound according to claim 1, which has a number average molecular weight of 500 to 50000.

3. A polyarylene comprising a structural unit (S) represented by Formula (2-2) below and a structural unit (T) represented by Formula (2-3) below, the structural unit (S) accounting for a proportion "s" of 95 to 50 mol%, the structural unit (T) accounting for a proportion "t" of 5 to 50 mol% ("s"+ "t" = 100 mol%) :

[Chem. 2]

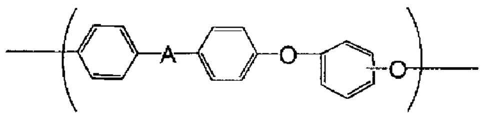 ... (2-2)

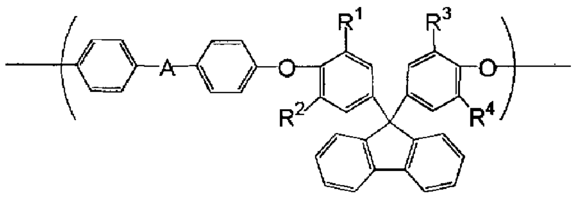 ... (2-3)

wherein each A independently represents a divalent linking group represented by -CO- or -$SO_2$-; and $R^1$ to $R^4$ each independently represent a hydrogen atom, a fluorine atom, an alkyl group or an aryl group.

4. The polyarylene according to claim 3, which further comprises a structural unit (U) represented by Formula (3-2) below:

[Chem. 3]

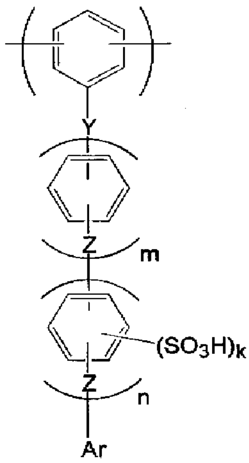

··· (3 − 2)

wherein Y is at least one divalent linking group selected from the group consisting of -CO-, $-SO_2-$, -SO-, -CONH-, -COO-, $-(CF_2)_p-$ (wherein p is an integer of 1 to 10) and $-C(CF_3)_2-$; each Z independently represents a direct bond or at least one divalent linking group selected from the group consisting of $-(CH_2)_p-$(wherein p is an integer of 1 to 10), $-C(CH_3)_2-$, -O- and -S-; Ar is an aromatic group with a sulfonic acid group; m is an integer of 0 to 10; n is an integer of 0 to 10; and k is an integer of 1 to 4.

**5.** A solid polymer electrolyte comprising the polyarylene of claim 4.

**6.** A proton conductive membrane comprising the polyarylene of claim 4.

**7.** A proton conductive membrane for direct methanol fuel cell comprising the polyarylene of claim 4.

FIG. 1

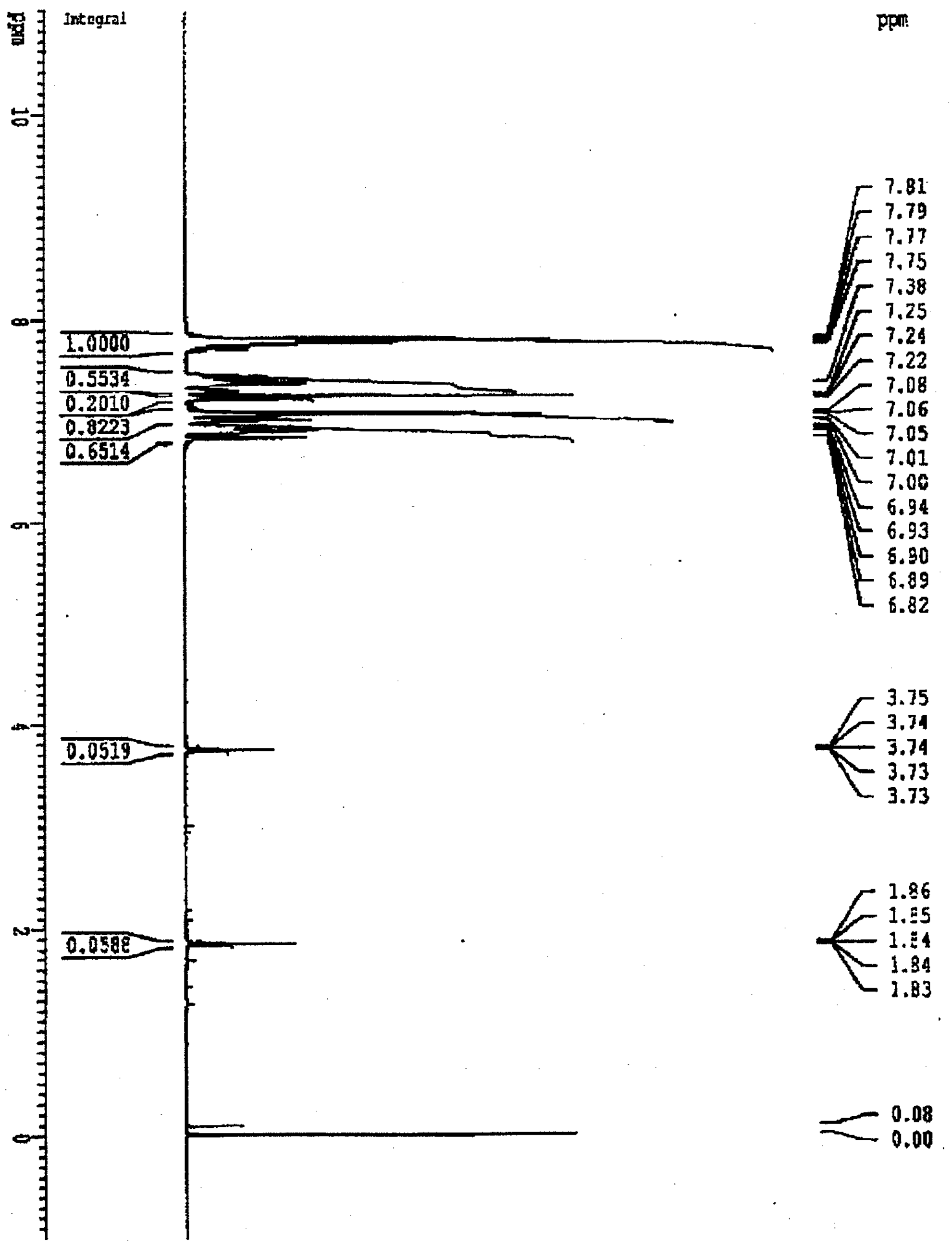
ppm
Integral
ppm
10
8
6
4
2
0
1.0000
0.5534
0.2010
0.8223
0.6514
0.0519
0.0588
7.81
7.79
7.77
7.75
7.38
7.25
7.24
7.22
7.08
7.06
7.05
7.01
7.00
6.94
6.93
6.90
6.89
6.82
3.75
3.74
3.74
3.73
3.73
1.86
1.85
1.84
1.84
1.83
0.08
0.00

FIG. 2

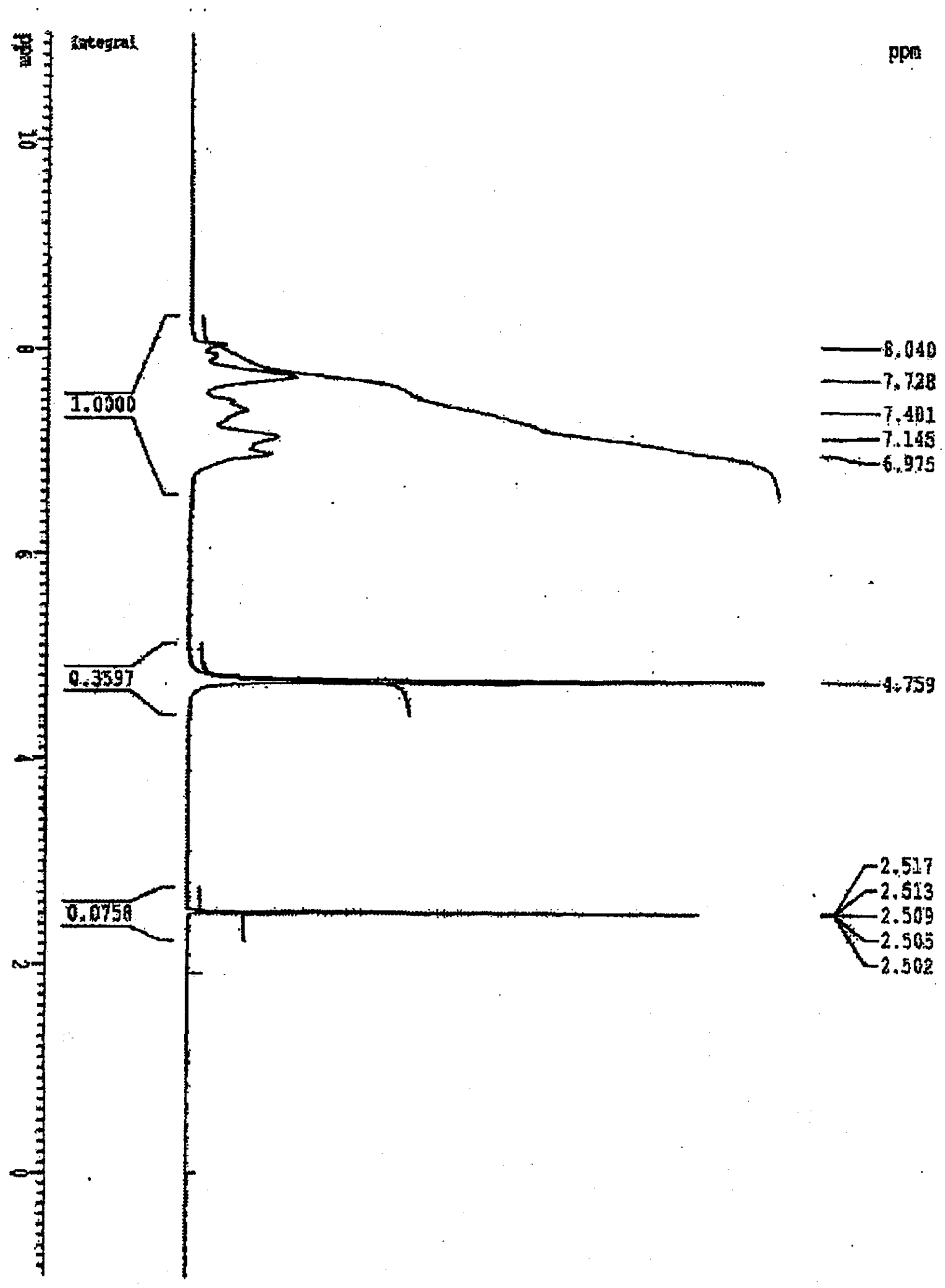

ppm
Integral
ppm
10
8
6
4
2
0
1.0000
0.3597
0.0758
8.040
7.728
7.401
7.145
6.975
4.759
2.517
2.513
2.509
2.505
2.502

FIG. 3

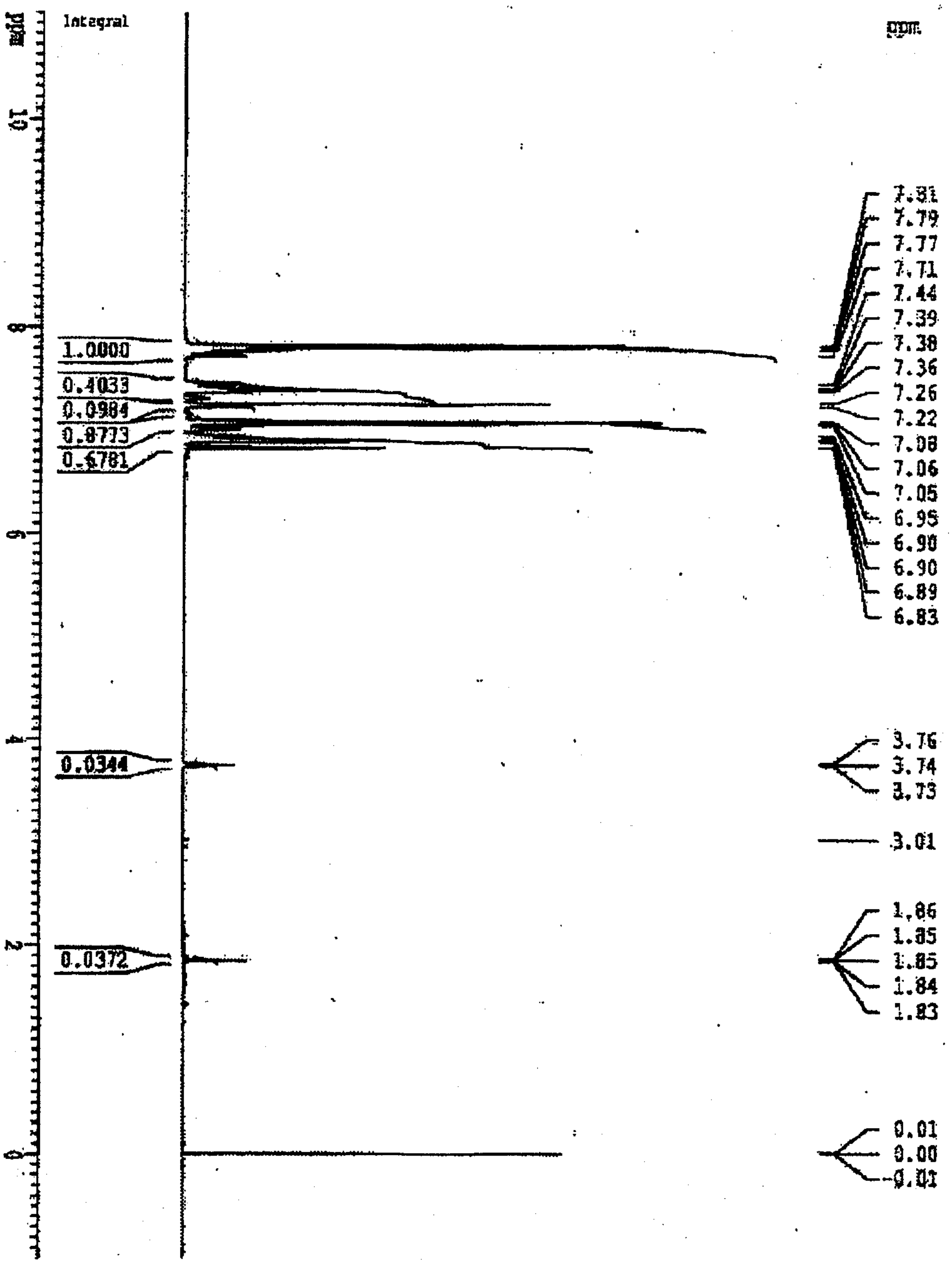
ppm
Integral
ppm
1.0000
0.4033
0.0984
0.8773
0.6781
0.0344
0.0372
7.81
7.79
7.77
7.71
7.44
7.39
7.38
7.36
7.26
7.22
7.08
7.06
7.05
6.95
6.90
6.90
6.89
6.83
3.76
3.74
3.73
3.01
1.86
1.85
1.85
1.84
1.83
0.01
0.00
-0.01

FIG. 4

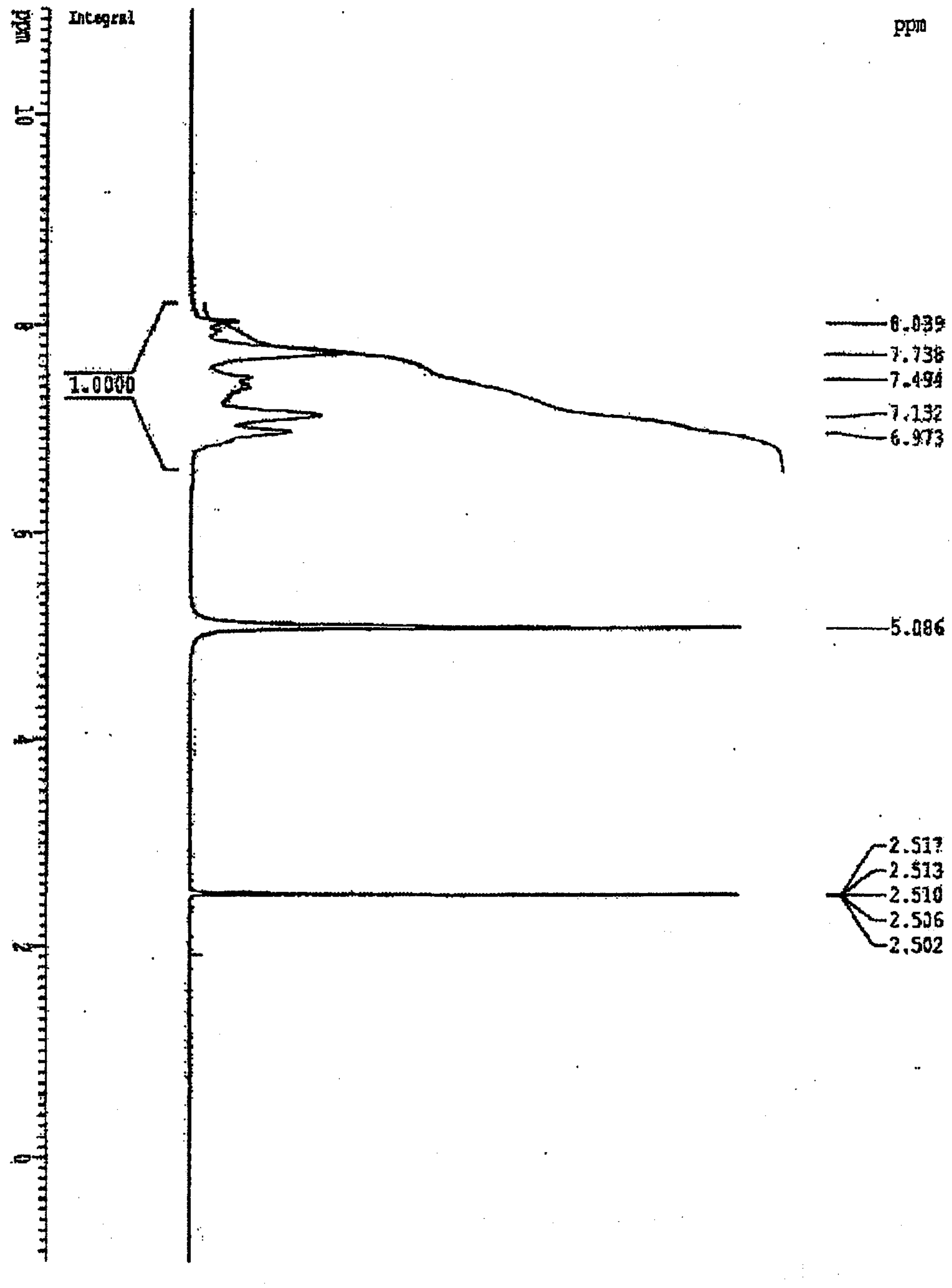
ppm
10
8
6
4
2
0
Integral
1.0000
ppm
8.039
7.738
7.494
7.132
6.973
5.086
2.517
2.513
2.510
2.506
2.502

FIG. 5

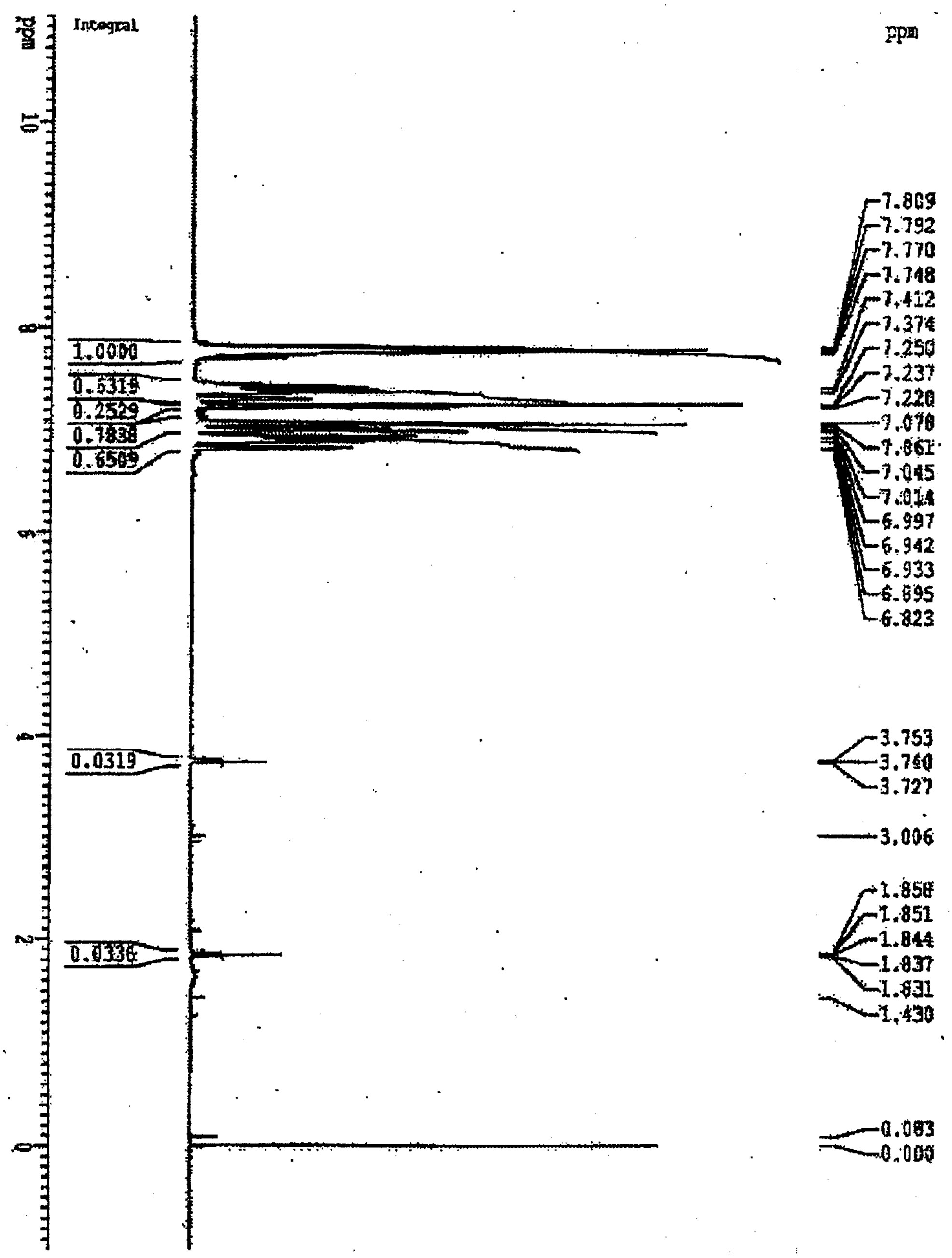

FIG. 6

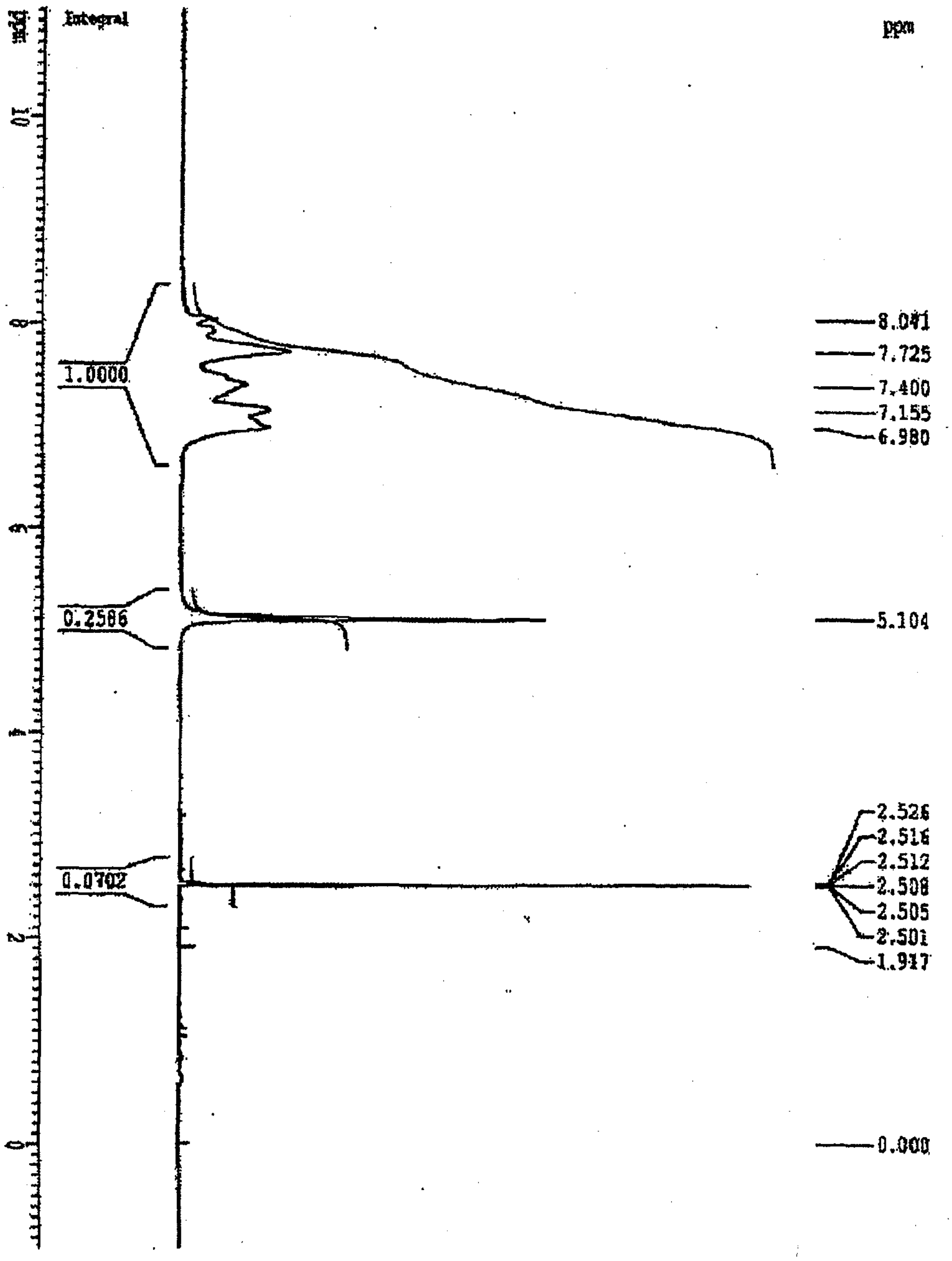
Integral
ppm
1.0000
0.2586
0.0702
8.041
7.725
7.400
7.155
6.980
5.104
2.526
2.516
2.512
2.508
2.505
2.501
1.917
0.000

**INTERNATIONAL SEARCH REPORT**

International application No.
PCT/JP2007/058886

A. CLASSIFICATION OF SUBJECT MATTER
*C08G65/40*(2006.01)i, *H01B1/06*(2006.01)i, *H01M8/02*(2006.01)i, *H01M8/10*(2006.01)i

According to International Patent Classification (IPC) or to both national classification and IPC

B. FIELDS SEARCHED

Minimum documentation searched (classification system followed by classification symbols)
C08G65/00-67/04, H01B1/06, H01M8/02, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
CA(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2006-12791 A (Toray Industries, Inc.),<br>12 January, 2006 (12.01.06),<br>Claims 1, 3, 4, 10, 12; Par. Nos. [0052], [0053], [0059], [0068], [0070], [0073] to [0075]<br>(Family: none) | 3<br>1,2,4-7 |
| Y | JP 2004-137444 A (JSR Corp.),<br>13 May, 2004 (13.05.04),<br>Claims; Par. Nos. [0001], [0004], [0005], [0041], [0042], [0069], [0084], [0085], [0103] to [0105]<br>& US 2004/044166 A1 & CA 2438009 A1<br>& EP 1400548 A1 & KR 2004018153 A<br>& CN 1495159 A | 1,2,4-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 June, 2007 (28.06.07) | 10 July, 2007 (10.07.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2007/058886

C (Continuation). DOCUMENTS CONSIDERED TO BE RELEVANT

| Category* | Citation of document, with indication, where appropriate, of the relevant passages | Relevant to claim No. |
|---|---|---|
| P,X | JP 2006-252813 A (JSR Corp.), 21 September, 2006 (21.09.06), Claims; Par. Nos. [0144] to [0148], [0159], [0160] (Family: none) | 6,7 |
| A | JP 63-120731 A (Central Glass Co., Ltd.), 25 May, 1988 (25.05.88), Claims; page 3, lower left column, line 12 to lower right column, line 13; page 4, upper right column, line 8 to lower left column, line 7 & GB 2197333 A & DE 3738339 A & FR 2606415 A & JP 63-120732 A & US 4806618 A | 1-7 |
| A | JP 63-120732 A (Central Glass Co., Ltd.), 25 May, 1988 (25.05.88), Claims; page 3, lower left column, line 12 to lower right column, line 12; page 4, upper right column, line 7 to lower left column, line 6 & GB 2197333 A & DE 3738339 A & FR 2606415 A & JP 63-120731 A & US 4806618 A | 1-7 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5403675 A
- JP 2004137444 A
- JP 2004345997 A
- JP 2004346163 A
- JP 2001342241 A
- JP 2002293889 A
- JP 2003143903 A
- JP 2003143904 A